Europäisches Patentamt

European Patent Office

Office européen des brevets

Veröffentlichungsnummer: **0 290 918**
**A2**

# EUROPÄISCHE PATENTANMELDUNG

Anmeldenummer: 88107062.7

Int. Cl.⁴ **G11B 23/04**

Anmeldetag: 03.05.88

Priorität: 13.05.87 DE 8706828 U

Veröffentlichungstag der Anmeldung:
**17.11.88 Patentblatt 88/46**

Benannte Vertragsstaaten:
**DE FR GB**

Anmelder: **Agfa-Gevaert AG**
**Patentabteilung**
**D-5090 Leverkusen 1(DE)**

Erfinder: **Toral, José**
**Stiftsbogen 162**
**D-8000 München 70(DE)**
Erfinder: **Lutz, Gottfried**
**Hauptstrasse 44a**
**D-8031 Seefeld(DE)**

Magnetbandcassette.

Eine Videocassette vom VHS-Typ, bei welcher des Cassettenoberteil mit dem Cassettenunterteil durch Schrauben lösbar miteinander verbunden ist, verlaufen neuerungsgemäß die Schraubensitze (3) konisch, wobei der konische Verlauf in den Bereich des oberen Drittels des Cassettenunterteils (2) hineinreicht, außerdem geschieht die Verschraubung des Oberteils mit dem Unterteil durch Senkkopfschrauben (4)

EP 0 290 918 A2

FIG. 1

## Magnetbandcassette

Die Neuerung betrifft Video-Cassetten des VHS-Typs, die aufgespulte bandförmige magnetische Aufzeichnungsträger enthalten und deren obere und untere Cassettenteile durch Schrauben miteinander lösbar verbunden sind.

Bekanntlich bestehen Videobandcassetten im wesentlichen aus zwei Hälften und zwar dem Ober- und dem Unterteil, wobei das Oberteil mittels Schrauben mit den Unterteil fest verbindbar ist. Video-Cassetten des VHS-Typs haben den Nachteil, daß die Verschraubungsart verhältnismäßig kostenund fertigungsungünstig gelöst worden ist.

Im Cassettenunterteil sind Schraubensitze vorgesehen, die relativ flach in das Unterteil eintauchen und die außerdem innen ein ebenes Profil haben. An den entsprechend zugeordneten Stellen des Oberteils sind zylindrische Säulen oder Dome mit Bohrungen zur Aufnahme der Schrauben angespritzt, welche bei einigen Ausführungsformen die Höhe des Oberteils überragen und von innen in die Schraubensitze des Unterteils eintauchen. Wegen der geschilderten Cassettenkonstruktion müssen die Schrauben relativ lang sein und sie lassen sich außerdem nicht günstig in die Schraubensitze einführen. Schließlich ist die Lage des Oberteils relativ zum Unterteil der Cassette nicht genau genug festgelegt.

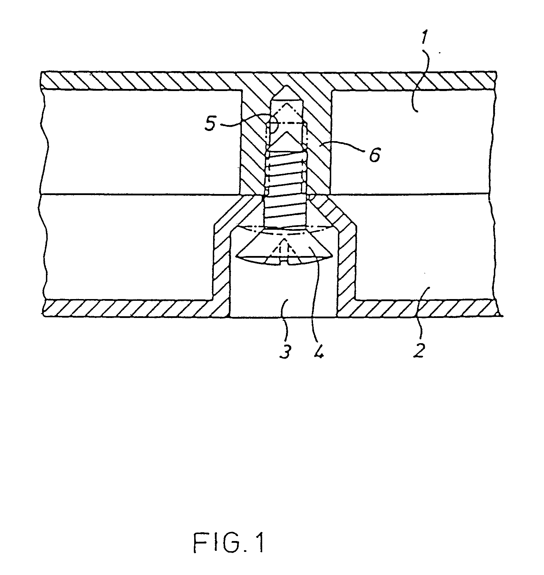

Diese Nachteile sollten beseitigt werden, was neuerungs gemäß mit einer Video-Cassette mit den im kennzeichnenden Teil des Anspruchs 1 aufgeführten Merkmalen gelöst wurde. Nähere Einzelheiten der Neuerung gehen aus dem Unteranspruch, der Zeichnung und der Beschreibung hervor.

Die Figur zeigt im Querschnitt die neuerungsgemäße Verbindung zwischen Cassettenoberteil und Cassettenunterteil. Im Unterteil (2) befindet sich als Schraubensitz (3) eine konisch zulaufende Bohrung, die eine Senkkopfschraube (4) aufnimmt. Diese dringt in die innere Bohrung (5) der zylindrischen Säule (6) ein, welche am Oberteil (1) angespritzt ist, und besorgt so die Verschraubung beider Teile. Die Säule (6) braucht dabei nicht länger zu sein als die Höhe des Oberteils (1).

Diese neuerungsgemäße Ausführung vermeidet die oben angegebenen Nachteile des bisherigen Standes der Technik, besorgt die Stabilisierung der gegenseitigen Lage von Cassettenoberteil und -unterteil und ermöglicht Materialersparnis bei beiden Teilen sowie den Gebrauch kürzerer Schrauben. Beispielsweise können die für Videocassetten des Beta-Typs gebräuchlichen Schrauben verwendet werden, was vereinfachte Lagerhaltung bedeutet.

Ein weiterer Vorteil besteht schließlich darin, daß durch die tieferen Schraubensitze im Cassettenunterteil gegenüber konventionellen VHS-Cassetten bei fertig verschraubten Cassetten ein besserer Transport bei der Fertigung ermöglicht ist.

## Ansprüche

1. Videocassette vom VHS-Typ, bestehend aus einem Cassettenoberteil und einem Cassettenunterteil, welche durch Schrauben lösbar miteinander verbunden sind, die in Schraubensitze im Unterteil eingeführt werden und in zylindrische Säulen mit Bohrungen des Oberteils eingeschraubt werden, dadurch, gekennzeichnet, daß
- die Schraubensitze (3) konisch verlaufen, wobei der konische Verlauf in den Bereich des oberen Drittels des Cassettenunterteils (2) hineinreicht
- die Verschraubung des Oberteils mit dem Unterteil durch Senkkopfschrauben (4) geschieht.

2. Videocassette nach Anspruch 1, dadurch gekennzeichnet, daß Schrauben, die für Videocassetten des Beta-Typs vorgeshen sind, Verwendung finden.

FIG.1